# EUROPÄISCHE PATENTSCHRIFT

(11) **EP 2 035 266 B1**
(45) Veröffentlichungstag und Bekanntmachung des Hinweises auf die Patenterteilung: **29.08.2012**
(21) Anmeldenummer: 07729948.5
(22) Anmeldetag: 06.06.2007
(51) Int. Cl.: B60T 10/02

(54) **HYDRODYNAMISCHER RETARDER**
HYDRODYNAMIC RETARDER
RALENTISSEUR HYDRODYNAMIQUE

(30) Priorität: 30.06.2006 DE 102006030794
(43) Veröffentlichungstag der Anmeldung: 18.03.2009
(73) Patentinhaber: ZF Friedrichshafen AG, 88038 Friedrichshafen (DE)
(72) Erfinder: REISCH, Bernhard, 88316 Isny (DE); SAUTER, Frank, 88074 Meckenbeuren (DE); WANNINGER, Heinz, 88074 Meckenbeuren (DE)
(86) Internationale Anmeldenummer: PCT/EP2007/055573
(87) Internationale Veröffentlichungsnummer: WO 2008/000601

(56) Entgegenhaltungen:
- DE-A1- 10 141 794
- DE-A1- 19 833 892

## Beschreibung

Die vorliegende Erfindung betrifft einen hydrodynamischen Retarder für ein Kraftfahrzeug nach der im Oberbegriff von Anspruch1 näher definierten Art.

Neben den Betriebsbremsen eines Fahrzeugs, insbesondere eines Nutzfahrzeugs, die im Regelfall einem Verschleiß unterliegende Reibungsbremsen sind, werden zusätzliche, verschleißfreie Verzögerungseinrichtungen von den Fahrzeugherstellern angeboten. Derartige Verzögerungseinrichtungen, beispielsweise Retarder oder Motorbremse, können unter anderem dazu verwendet werden, die Fahrzeuggeschwindigkeit im Gefälle konstant zu halten.

Zu den Retardern zählen sowohl zusätzlich am Getriebe oder Motor angeordnete hydrodynamische, hydrostatische oder elektrodynamische Bremseinrichtungen, als auch solche Systeme, die in Form eines "Intarders" innerhalb des Getriebegehäuses vorgesehen sind. Des Weiteren werden Retarder in Primärretarder, die in Abhängigkeit von der Motordrehzahl arbeiten, und in Sekundärretarder, die in Abhängigkeit von der Fahrzeuggeschwindigkeit arbeiten, unterschieden. Bei hydrodynamischen Retardern ist im Allgemeinen der Rotor zum Abbremsen des Fahrzeugs direkt mit einer Getriebewelle verbunden. Bei Primärretardern ist dies die Antriebswelle bzw. Getriebeeingangswelle, und bei Sekundärretardern ist dies die Getriebeabtriebswelle. Der Stator ist in der Regel gehäusefest. Der Retarder ist üblicherweise nicht aktiviert, wenn Rotor und Stator nicht mit Flüssigkeit befüllt sind.

Retarder werden bei Nutzfahrzeugen vor allem eingesetzt, um die beispielsweise bei einer Bremsung aus hoher Fahrgeschwindigkeit anfallende kinetische Bremsenergie aufzunehmen und in Wärme umzusetzen, sind aber auch für geforderte Dauerbremsleistungen gut geeignet, beispielsweise bei lang andauernder Bergabfahrt.

Bei hydrodynamischen Retardern wird die Strömungsenergie einer Flüssigkeit zum Bremsen benutzt, wobei das physikalische Wirkprinzip dem einer hydrodynamischen Kupplung mit feststehender Turbine entspricht. Demnach weist ein hydrodynamischer Retarder einen sich im Leistungsfluss befindlichen Rotor und einen mit dem Retardergehäuse fest verbundenen Stator auf. Beim Betätigen des Retarders wird eine der gewünschten Bremsleistung entsprechende Ölmenge in den Schaufelraum eingebracht, wobei der drehende Rotor das Öl mitnimmt, das sich am Stator abstützt, wodurch eine Bremswirkung auf die Rotorwelle erzeugt wird.

Zur Steuerung werden bei Retardern nach dem Stand der Technik im Wesentlichen zwei verschiedene Prinzipien angewandt.

Zum einen werden pneumatische Steuerungssysteme eingesetzt, bei denen ein Regeldruck eines Retarders durch einen Luftdruck direkt auf einen Arbeitsmedium- bzw. Ölspiegel eingestellt wird. Nachteilig sind hier das begrenzte Regelverhalten und die Notwendigkeit einer Trennungseinheit zwischen Arbeitsmedium und Luftdruck sowie das Vorhandensein einer fahrzeugseitigen Pneumatikversorgung.

Zum anderen werden Steuerungen eingesetzt, bei denen der hydraulische Druck durch eine permanent angetriebene Hydraulikpumpe bereitgestellt wird, bevorzugterweise durch eine Zahnradpumpe. Nachteilig bei diesem Konzept ist der drehzahlabhängige Volumenstrom der verwendeten Pumpe, was insbesondere bei niedrigen Drehzahlen einen Befüllspeicher und bei hohen Drehzahlen große Ventil- und Strömungsquerschnitte erforderlich macht.

Nachteile der beschriebenen Steuerungssysteme für einen Retarder sind unter anderem eine schlechte Wiederansprechzeit der Systeme sowie zusätzliche Kosten für beispielsweise einen Speicher und für Steuerventile. Des Weiteren ist ein großer Bauraum erforderlich.

Bei zum Stand der Technik gehörenden Retardern, welche einen gemeinsamen Ölhaushalt aufweisen, wird während einer bremsfreien Phase, also während eines Zugbetriebes, durch eine Pumpe Öl aus einem Getriebesumpf angesaugt und durch einen Filter, einen Wärmetauscher und ein Umschaltventil geleitet. Ein im Anschluss an den Wärmetauscher sitzendes Druckbegrenzungsventil regelt den Systemdruck so, dass genügend hydraulischer Druck zum Umschalten vorhandener Ventile und somit zum Einschalten des Retarders zur Verfügung steht. Des Weiteren sind Retarder bekannt, welche einen Speicher aufweisen, von welchem zusätzlich Öl in den Retarder befördert werden kann. Der Speicher wird hierfür mit Druckluft beaufschlagt, wodurch der Inhalt des Speichers über beispielsweise ein Regelventil in den Retarder befördert werden kann.

Nachteilig hierbei ist, dass hydraulische Steuerungen grundsätzlich systembedingte, zeitliche Zuschaltverzögerungen aufweisen. Diese setzen sich aus verschiedenen Todzeiten zusammen. Ein wesentlicher Faktor ist dabei die Verzögerung, welche zum hydraulischen Verschieben von Kolbenventilen benötigt wird. Insbesondere ein für den Kühlkreislauf zuständiges Schaltventil ist aufgrund des erforderlichen Volumenstromes vorzugsweise mit einem großen Querschnitt und somit mit einem großen Kölbendurchmesser und Kolbenhub ausgeführt. Demzufolge benötigt ein solches Schaltventil einen großen Steuer-ölvolumenstrom und eine relativ lange Zeit, bis der Kolben in die Schaltstellung "EIN" verfahren ist. Während dieser Zeit fließt der Ölvolumenstrom allerdings noch in den Getriebesumpf ab, wobei die abströmende Ölmenge nicht zum Befüllen des Retarders zur Verfügung steht. Wird nun in dieser Phase ein Speicher mit Druck beaufschlagt, so verschlechtert sich dieser Nachteil, da auch von diesem Ölvolumen ein Teil direkt den Retarder wieder verlässt. Daher wird der Speicher verzögert zugeschaltet und zwar erst nach dem vollständigen Umschalten der Hydraulikventile. Eine zeitliche Verzögerung wird somit bewusst akzeptiert.

In der DE 101 41 794 A1 wird ein hydrodynamischer Retarder für ein Kraftfahrzeug offenbart, welcher über einen hydraulischen Kreislauf angesteuert wird. Der hydraulische Kreislauf weist einen Wärmetauscher und eine Hydraulikpumpe auf, wobei das Fördervolumen der Hydraulikpumpe derart verstellbar ist, dass ein Volumenstrom unabhängig von der Fahrzeuggeschwindigkeit bzw. der Gelenkwellen- oder Retarderdrehzahl einstellbar ist. Gemäß einer Ausführungsform wird die Hydraulikpumpe so geschaltet bzw. geregelt, dass sich über einen weiten Drehzahlbereich ein konstanter Volumenstrom einstellt, welcher zum Befüllen und Regeln des Retarders ausreichend ist. Diese Konstruktion weist den Vorteil auf, dass kein Befüllspeicher benötigt wird. Außerdem ist die Wiederansprechzeit der Hydraulikpumpe gleich der Erstansprechzeit, so dass sich ein robustes zeitliches Verhalten ergibt. Wird eine Bremsung eingeleitet, so muss der Retarder möglichst schnell befüllt werden. Hierfür wird über ein Proportionalventil ein Steuerdruck erzeugt, der die Hydraulikpumpe auf eine maximale Verdrängung einstellt.

Auch hier tritt der Nachteil auf, dass während der Zuschaltung des Retarders Öl in den Getriebesumpf abströmt und nicht zur Befüllung des Retarders dient. Da die Befüllung hier ausschließlich über die Pumpe erfolgt, also ohne einen Speicher, kann während der ersten Zuschaltphase des Retarders ein relativ großes Ölvolumen in den Getriebesumpf abströmen.

Der vorliegenden Erfindung liegt die Aufgabe zugrunde, das Ansteuerverhalten eines hydrodynamischen Retarders ohne zusätzlichen Aufwand und Kosten zu verbessern und die Nachteile des Standes der Technik zu beseitigen.

Die der Erfindung zugrunde liegende Aufgabe wird durch einen, auch die kennzeichnenden Merkmale des Hauptanspruchs aufweisenden, gattungsgemäßen, hydrodynamischen Retarder gelöst.

Die Erfindung beinhaltet einen hydrodynamischen Retarder für ein Getriebe in einem Kraftfahrzeug, welcher einen Rotor und einen Stator aufweist. Der Retarder wird über ein elektrohydraulisches System angesteuert, welches unter anderem eine Steuerungs- und Regelungseinheit, einen Hydraulikkreislauf, Schaltventile und einen Ölhaushalt aufweist. Der Rotor und der Stator sind vorzugsweise in einem Retardergehäuse angeordnet, welches mit dem Hydraulikkreislauf verbunden ist. Der Hydraulikkreislauf weist einen Filter, eine Hydraulikpumpe, einen Wärmetauscher sowie ein Schaltventil und Hydraulikkanäle auf. Das Fördervolumen der Hydraulikpumpe ist derart verstellbar, dass ein Volumenstrom unabhängig von der Fahrzeuggeschwindigkeit bzw. der Gelenkwellen- oder Retarderdrehzahl einstellbar ist.

Während einer bremsfreien Phase wird über die Hydraulikpumpe von einem Getriebesumpf Öl angesaugt. Dieses Öl wird durch einen Wärmetauscher geleitet, wodurch die Öltemperatur an eine Temperatur eines Kühlmittels in einem Fahrzeugkühlsystem angepasst wird. Der Retarder und das Getriebe können so angeordnet sein, dass sie einen gemeinsamen Ölhaushalt aufweisen. Bei Getrieben mit gemeinsamem Ölhaushalt ist die Saugstelle vorteilhafterweise im vorderen Bereich der Gehäuse angeordnet, um einen guten Austausch des Öls und somit eine effektive Temperierung des Getriebes sicherzustellen. Im Hydraulikkreislauf sind das Schaltventil und eine Blende, welche einen definierten hydraulischen Querschnitt darstellt, angeordnet, welche in Verbindung mit den Hydraulikkanälen einen entsprechenden Druckabfall erzeugen. Dieser Druck wirkt auf eine Rückführfläche an der Hydraulikpumpe, wodurch diese den erforderlichen Volumenstrom unabhängig von der Pumpendrehzahl selbständig steuert bzw. regelt.

Im elektrohydraulischen System ist ein weiteres Ventil vorgesehen, welches das Schaltventil im Hydraulikkreislauf und somit den Retarder zu- bzw. abschaltet. Durch die erfindungsgemäße Ausbildung und Ansteuerung dieses Ventils wird eine deutliche Verbesserung im Ansteuerverhalten des Retarders erzielt. Eine Rückflussleitung steht mit diesem Ventil in Verbindung. Während einer bremsfreien Phase wird der Volumenstrom durch dieses Ventil hindurchgeführt und erst nach dem Ventil wieder zum Ölhaushalt zugeführt. Wird das Ventil durch beispielsweise die Steuerungs- und Regelungseinheit betätigt, so kann der Volumenstrom in der Rückflussleitung durch dieses Ventil teilweise oder komplett gesperrt werden. Dadurch ist gewährleistet, dass unmittelbar nach dem Ansprechen des Ventils kein Öl mehr in den Ölhaushalt zurückströmen kann und die gesamte Fördermenge der Hydraulikpumpe zum Schalten der hydraulisch betätigten Ventile und zum Verstellen der Hydraulikpumpe zur Verfügung steht. Die Dynamik des Systems kann damit deutlich verbessert werden. Das Ventil kann in verschiedenen Ausführungsformen ausgebildet sein, beispielsweise als 5/2-Wegeventil oder als 5/3-Wegeventil. Es ist über die bereits vorhandene Steuerungs- und Regelungseinheit oder über eine eigene Einheit ansteuerbar. Des Weiteren kann es derart ausgebildet sein, dass es beispielsweise hydraulisch, pneumatisch, elektrisch bzw. elektromagnetisch oder über einen Stellmotor angesteuert werden kann.

Eine im System anfallende Leckage kann durch die Hydraulikpumpe ausgeglichen werden. Vorteilhafterweise wird die Leckage und das nach dem Ausschalten des Retarders frei werdende Ölvolumen zurück in das Ölreservoir geleitet, wodurch sofort nach dem Ausschalten des Retarders wieder genügend Öl für die nächste Bremsung bereit steht und die Wiederansprechzeit des Systems gleich der Erstansprechzeit ist. Zur Entlüftung des Ölreservoirs kann dieses mit einem Getriebeentlüftungssystem bzw. mit einem Getriebeentlüfter in Verbindung stehen oder eine eigene Entlüftungsvorrichtung aufweisen. Das erfindungsgemäße elektrohydraulische System ist sowohl bei Primär- als auch bei Sekundärretardern implementierbar.

Im Folgenden wird das Grundprinzip der Erfindung, welche mehrere Ausführungsformen zulässt, an Hand einer Zeichnung beispielhaft näher erläutert.

Es zeigen:
- Fig. 1: ein Steuerschema eines hydrodynamischen Retarders,
- Fig. 2: ein Steuerschema eines hydrodynamischen Retarders gemäß einer ersten Ausführungsform der vorliegenden Erfindung,
- Fig. 3: ein Steuerschema eines hydrodynamischen Retarders gemäß einer zweiten Ausführungsform der vorliegenden Erfindung und
- Fig. 4: ein Diagramm, in welchem eine Ventilposition über die Zeit dargestellt ist.

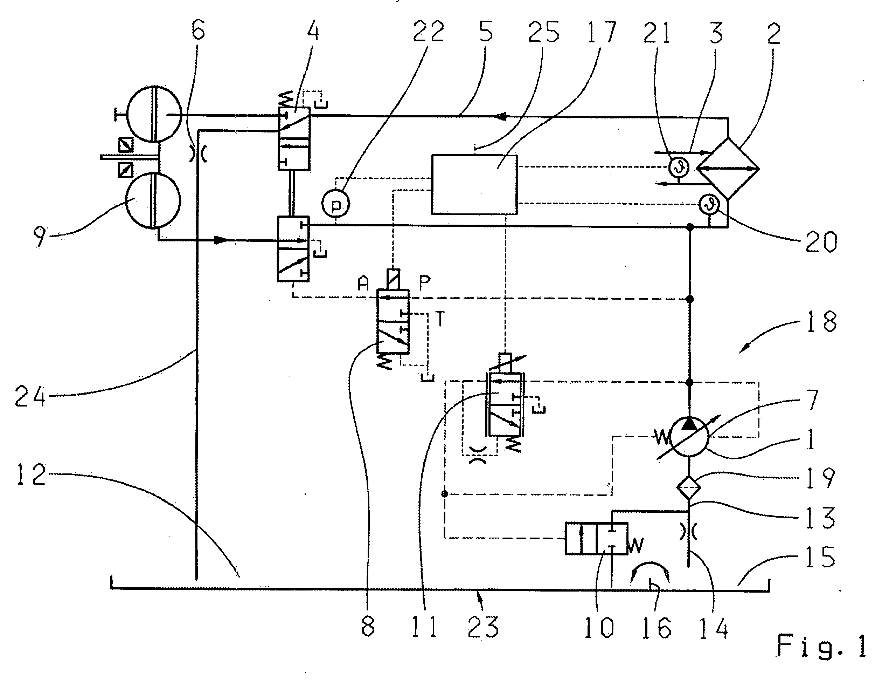

Gemäß Fig. 1 weist ein elektrohydraulisches System 18 zur Steuerung eines hydrodynamischen Retarders 9 eine Steuerungs- und Regelungseinheit 17, einen Hydraulikkreislauf 5, Schaltventile 4, 8, 10, 11 sowie einen Ölhaushalt 23 auf. Der Hydraulikkreislauf 5 weist eine Hydraulikpumpe 1, einen Filter 19, einen Wärmetauscher 2 und das Schaltventil 4 auf. Ferner ist die Steuerungs- und Regelungseinheit 17 mit Temperatursensoren 20, 21 und einem Drucksensor 22 verbunden. Über den ersten Temperatursensor 20 wird die Öltemperatur und über den zweiten Temperatursensor 21 wird die Temperatur eines Fahrzeugkühlsystems 3 überwacht. Der Drucksensor 22 kann zur Überwachung eines Regeldrucks für den Retarder 9 vorgesehen sein. Die Steuerungs- und Regelungseinheit 17 kann vorteilhafterweise mit einem Controller Area Network (CAN) 25 verbunden sein. Das Ventil 11 ist vorzugsweise als Proportionalventil ausgebildet und kann von der Steuerungs- und Regelungseinheit 17 angesteuert werden. Es dient zur Steuerung bzw. Regelung der Hydraulikpumpe 1 und vorzugsweise auch zur Betätigung des Befüllventils 10. Der Ölhaushalt 23 besteht aus einem Ölreservoir 12 des Retarders 9 und einem Getriebesumpf 15 eines Getriebes. Das Ölreservoir 12 und der Getriebesumpf 15 sind durch eine Überlaufkante 16 voneinander getrennt. Im elektrohydraulischen System 18 ist vorgesehen, dass die Hydraulikpumpe 1 als eine in ihrem Verdrängungsvolumen verstellbare Pumpe ausgebildet ist. Zwischen der Hydraulikpumpe 1 und dem Ölreservoir 12 bzw. dem Getriebesumpf 15 ist in einem Saugkanal 13 der Filter 19 angeordnet.

Während einer bremsfreien Phase saugt die Hydraulikpumpe 1 vom Getriebesumpf 15 Öl an, welches durch den Wärmetauscher 2 geleitet wird. Hierdurch wird die Öltemperatur an die Temperatur eines Kühlmittels in einem Fahrzeugkühlsystem 3 angepasst. Im Hydraulikkreislauf 5 sind das Schaltventil 4 und eine Blende 6 angeordnet, welche in Verbindung mit den Hydraulikkanälen einen entsprechenden Druckabfall erzeugen. Dieser Druck wirkt auf eine Rückführfläche 7 an der Hydraulikpumpe 1, wodurch diese einen erforderlichen Volumenstrom unabhängig von der Pumpendrehzahl selbständig regeln kann. Die Höhe der Bremswirkung wird über den Pumpendruck der Hydraulikpumpe 1 eingestellt, welcher durch das Ventil 11 gesteuert bzw. geregelt werden kann. Wird eine Bremsung eingeleitet, so muss der Retarder 9 möglichst schnell befüllt werden. Hierfür wird über das Ventil 11 ein Steuerdruck erzeugt, der die Hydraulikpumpe 1 auf eine maximale Verdrängung einstellt. Um die geforderte Ansprechzeit des Systems sicher zu stellen ist ein großer Ölvolumenstrom erforderlich.

Um diesen Ölvolumenstrom trotz eines relativ langen Getriebesaugkanals 14 sicher zu gewährleisten, weist das elektrohydraulische System 18 zur Ansteuerung des hydrodynamischen Retarders 9 das Befüllventil 10 auf. Dieses Befüllventil 10 kann beispielsweise als 2/2-Wegeventil ausgebildet sein. Durch das Befüllventil 10 kann eine Verbindung zwischen dem Ölreservoir 12 und dem Saugkanal 13 der Hydraulikpumpe 1 hergestellt werden. Das Ölreservoir 12 ist vorzugsweise nahe am Retarder 9 liegend angeordnet. Somit wird sichergestellt, dass der Retarder 9 zusätzlich aus diesem Ölreservoir 12 befüllt werden kann. Über den Getriebesaugkanal 14 muss daher nicht mehr die gesamte Ölmenge angesaugt werden, wodurch die Ansprechzeit des elektrohydraulischen Systems 18 verbessert wird. Eine im elektrohydraulischen System 18 anfallende Leckage kann durch die Hydraulikpumpe 1 ausgeglichen werden. Vorteilhafterweise wird die Leckage und das nach dem Ausschalten des Retarders 9 frei werdende Ölvolumen zurück in das Ölreservoir 12 geleitet, wodurch sofort nach dem Ausschalten wieder genügend Öl für die nächste Bremsung bereit steht und somit eine Wiederansprechzeit des Systems 18 gleich der Erstansprechzeit ist. In bremsfreien Phasen kann das Öl durch die Hydraulikpumpe 1 aus dem Getriebesumpf 15 über den Wärmetauscher 2 in das Ölreservoir 12 geleitet werden. Das Ölreservoir 12 weist eine Überlaufkante 16 zum Getriebesumpf 15 auf. Erst wenn ein Ölstand einen bestimmten Füllstand erreicht hat, also das Ölreservoir 12 voll befüllt ist, läuft das überschüssige Öl zurück in den Getriebesumpf 15. So kann auch bei extremen Bergabfahrten genügend Öl in der Nähe des Retarders 9 auf Vorrat gehalten werden.

Die Fig. 1 zeigt ein Steuerschema eines hydrodynamischen Retarders 9 zu Beginn einer Bremsphase. Hier ist das elektromagnetische Schaltventil 8 als 3/2-Wegeventil in betätigtem Zustand dargestellt. Das Schaltventil 8 wird von der Steuerungs- und Regelungseinheit 17 angesteuert. Das nachfolgende hydraulische Schaltventil 4 befindet sich allerdings noch in der Schaltstellung "AUS". Die Hydraulikpumpe 1 wird bereits durch das Ventil 11 in Richtung maximale Förderung verstellt. In dieser Phase wird deutlich, wie ein Ölvolumenstrom weiterhin über die Hydraulikpumpe 1, den Wärmetauscher 2, das Schaltventil 4, die Blende 6 und die Rückflussleitung 24 in das Ölreservoir 12 bzw. den Ölhaushalt 23 und nicht in den Retarder 9 fließt. Erst nachdem sich das Schaltventil 4 in der Schaltstellung "EIN" befindet, kann das Öl von der Hydraulikpumpe 1 in den Retarder 9 geleitet werden. Das Befüllventil 10 kann vorzugsweise mittels hydraulischen Drucks angesteuert werden. Vorteilhafterweise können die Hydraulikpumpe 1 und das Befüllventil 10 mit demselben Ventil 11 gesteuert bzw. geregelt werden, beispielsweise mit einem Proportionalventil. Das Befüllventil 10 ist in nicht betätigtem Zustand dargestellt.

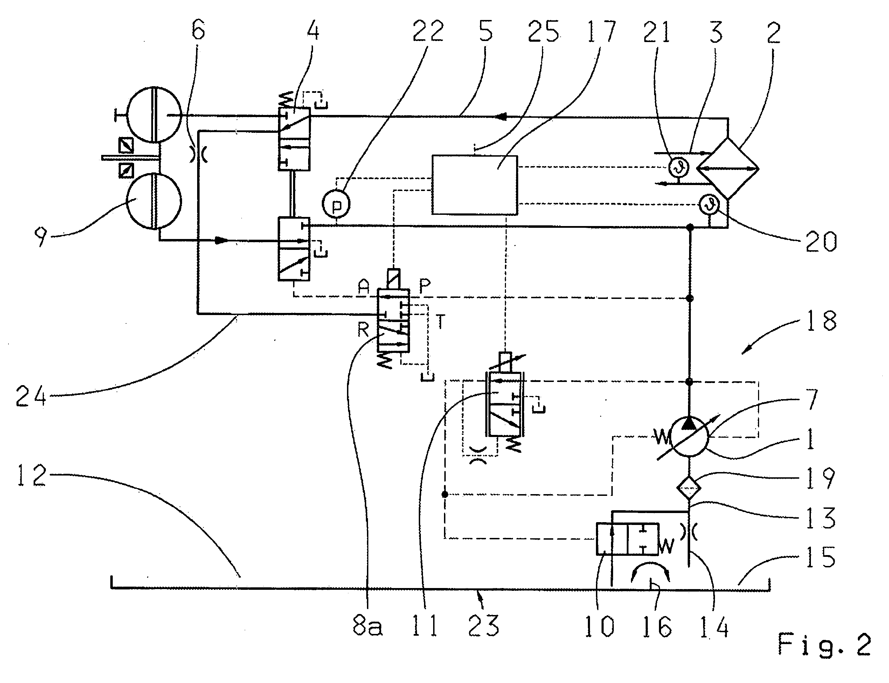

Die Fig. 2 zeigt eine erfindungsgemäße Ausführungsform eines Steuerschemas für einen hydrodynamischen Retarder 9. Im Unterschied zu der in der Fig. 1 beschriebenen Ausführungsform ist das Schaltventil 8 nicht als 3/2-Wegeventil, sondern als 5/2-Wegeventil 8a ausgebildet und die Rückflussleitung 24 steht mit dem Schaltventil 8a in Verbindung. Ein Volumenstrom während einer bremsfreien Phase wird somit zusätzlich durch das Schaltventil 8a hindurchgeführt. Wird das Schaltventil 8a über die Steuerungs- und Regelungseinheit 17 betätigt, so wird die Rückflussleitung 24 durch das Schaltventil 8a sofort verschlossen. Somit ist gewährleistet, dass während der Zuschaltphase des Retarders 9 unmittelbar nach dem Ansprechen des Schaltventil 8a kein Öl mehr in den Ölhaushalt 23 zurückströmen kann und die gesamte Fördermenge der Hydraulikpumpe 1 zum Schalten der entsprechenden Ventile 4, 10 und zum Verstellen der Hydraulikpumpe 1 zur Verfügung steht. Die Dynamik des Systems 18 kann damit deutlich verbessert werden. Durch eine vorteilhafte Anordnung der Hydraulikkanäle im elektrohydraulischen System 18 kann die Rückflussleitung 24 mit einem bereits vorhandenen Ventil verbunden und das Verschließen der Rückflussleitung 24 in dieses Ventil integriert werden. Beispielsweise kann die Funktion des Schaltventils 8a in das Schaltventil 8 der Fig. 1 integriert bzw. das Schaltventil 8 der Fig. 1 zu einem 5/2-Wegeventil 8a erweitert werden. Somit kann das elektrohydraulische System 18 kostengünstig und ohne zusätzlichen Bauraumaufwand realisiert werden. Dieses elektrohydraulische System 18 kann sowohl für Retarder 9 mit getrenntem Ölhaushalt als auch für Retarder 9 mit gemeinsamem Ölhaushalt 23 verwendet werden. Diese Ausführungsform des elektrohydraulischen Systems 18 kann auch ohne das Befüllventil 10 realisiert werden.

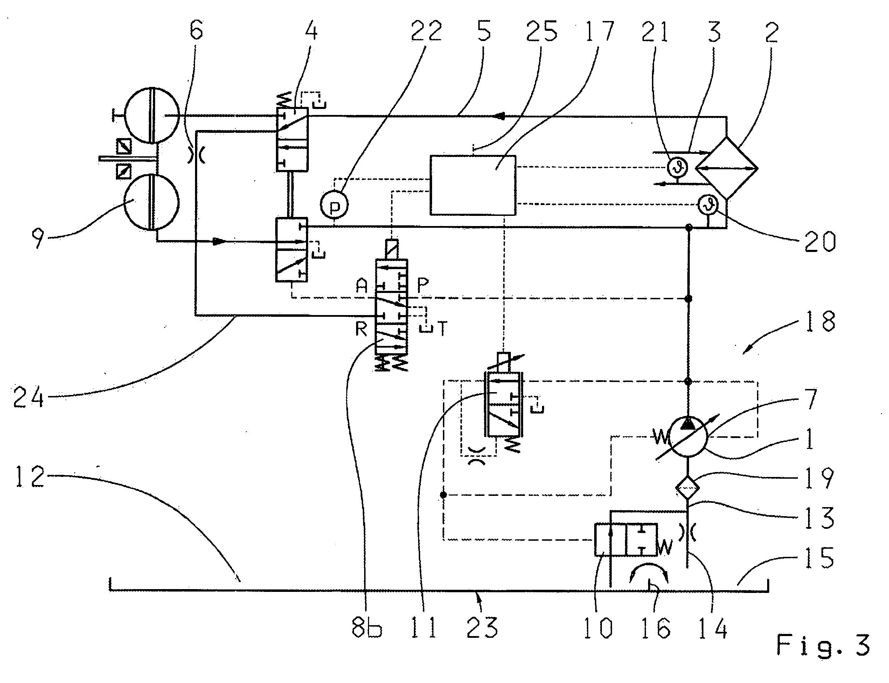

Die Fig. 3 zeigt eine weitere Ausführungsform eines Steuerschemas für einen hydrodynamischen Retarder 9. Im Unterschied zu der in der Fig. 2 beschriebenen Ausführungsform ist das Schaltventil 8a nicht als 5/2-Wegeventil, sondern als 5/3-Wegeventil 8b ausgebildet. Die Rückflussleitung 24 steht mit dem Schaltventil 8b in Verbindung. Durch eine entsprechende Ansteuerung des Schaltventils 8b über die Steuerungs- und Regelungseinheit 17, kann das Schaltventil 8b in seine Mittelstellung gebracht werden. In dieser Mittelstellung wird ein Volumenstrom in der Rückflussleitung 24 durch das Schaltventil 8b gesperrt, beispielsweise durch einen Ventilschieber bzw. einen Kolben. Der Retarder 9 wird dabei allerdings noch nicht zugeschaltet. Dies hat den Vorteil, dass der Volumenstrom durch die Rückflussleitung 24 gesperrt wird, das Ventil 4 aber erst nach vollständigem Umschalten des Befüllventils 10 mittels der dritten Stellung des Schaltventils 8b durchgeschaltet werden kann, also nachdem die Verbindung zum Ölreservoir 12 sicher hergestellt ist. Es ist somit gewährleistet, dass ausschließlich aus dem Ölreservoir 12 Öl angesaugt werden kann, wodurch bei Getrieben mit ungünstigem Getriebesaugkanal 14 Störungen in der Ansaugung verhindert werden können. Der Zeitpunkt des Durchschaltens des Schaltventils 8b kann durch eine Zeitfunktion festgelegt werden. Diese Zeitfunktion kann beispielsweise in der Steuerungs- und Regelungseinheit 17 oder in einer separaten Ansteuereinheit hinterlegt sein. Außerdem ist es denkbar, dass der Zeitpunkt des Durchschaltens des Schaltventils 8b durch eine beliebige andere Information, welche im elektrohydraulischen System 18 verfügbar ist, festgelegt werden kann, beispielsweise über ein Drucksignal im Hydraulikkreislauf 5.

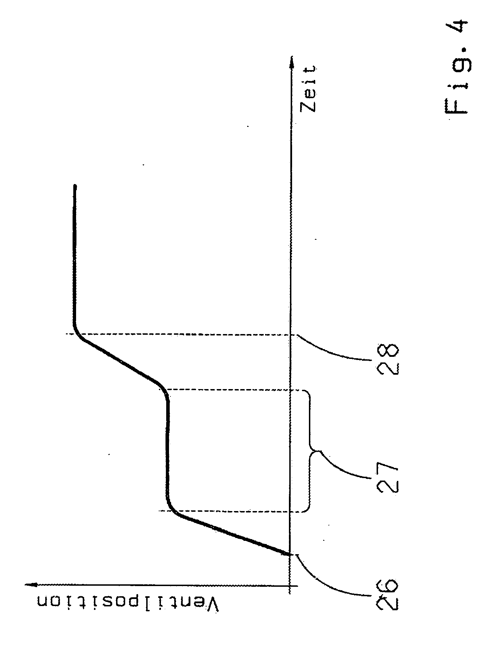

In der Fig. 4 ist die Ventilposition des Schaltventils 8b über der Zeit dargestellt. Das Schaltventil 8b ist als 3 Stellungsventil ausgebildet, beispielsweise als 5/3-wegeventil wie in der Fig. 3 beschrieben. Zum Zeitpunkt 26 ist das Schaltventil 8b nicht angesteuert und somit ist auch der Retarder 9 nicht zugeschaltet. Befindet sich das Schaltventil 8b in seiner Mittelstellung 27, wird die Rückflussleitung 24 verschlossen, der Retarder 9 allerdings noch nicht hinzugeschaltet. Zum Zeitpunkt 28 ist das Schaltventil 8b komplett betätigt, wobei die Rückflussleitung 24 weiterhin verschlossen ist und das Schaltventil 4 angesteuert wird. Bei betätigtem Schaltventil 4 wird der Retarder 9 über den Hydraulikkreislauf 5 mit Öl befüllt. Des Weiteren kann das Schaltventil 8b auch so ausgeführt sein, dass der Ölvolumenstrom in der Mittelstellung 27 des Schaltventils 8b nicht ganz sondern nur teilweise gesperrt wird, was hinsichtlich auftretender Druckstöße während der Zuschaltung, des Retarders 9 vorteilhaft ist.

Bezugszeichen
- 1: Hydraulikpumpe
- 2: Wärmetauscher
- 3: Fahrzeugkühlsystem
- 4: Schaltventil
- 5: Hydraulikkreislauf
- 6: Blende, Drossel
- 7: Rückführfläche an der Hydraulikpumpe.
- 8: Schaltventil, 3/2-Wegeventil
- 8a: Schaltventil, 5/2-Wegeventil
- 8b: Schaltventil, 5/3-wegeventil
- 9: Retarder
- 10: Befüllventil, 2/2-Wegeventil
- 11: Schaltventil
- 12: Ölreservoir
- 13: Saugkanal
- 14: Getriebesaugkanal
- 15: Getriebesumpf
- 16: Überlaufkante
- 17: Steuerungs- und Regelungseinheit, ECU
- 18: elektrohydraulisches System
- 19: Filter
- 20: Temperatursensor
- 21: Temperatursensor
- 22: Drucksensor
- 23: Ölhaushalt
- 24: Rückflussleitung
- 25: Controller Area Network (CAN)
- 26: Retarder "AUS"
- 27: Ventil-Mittelstellung
- 28: Retarder "EIN"

## Patentansprüche

1. Hydrodynamischer Retarder (9) für ein Kraftfahrzeug, welcher einen Rotor und einen Stator aufweist und über ein elektrohydraulisches System (18) ansteuerbar ist, mit einer Steuerungs- und Regelungseinheit (17) und einem Hydraulikkreislauf (5), welcher eine Pumpe (1), einen Wärmetauscher (2) und ein Ventil (4) aufweist, wobei ein Volumenstrom der Pumpe (1) unabhängig von der Fahrzeuggeschwindigkeit bzw. der Gelenkwellen- oder Retarderdrehzahl verstellbar ist und über die Pumpe (1) ein Ölumlauf sichergestellt wird, **dadurch gekennzeichnet, dass** im elektrohydraulischen System (18) ein elektromagnetisches Schaltventil (8a, 8b) angeordnet ist, das Ventil (8a, 8b) über die Steuerungs- und Regelungseinheit (17) ansteuerbar ist, über welches ein Volumenstrom in einer Rückflussleitung (24) zu einem Ölhaushalt (23) teilweise oder komplett sperrbar ist

2. Hydrodynamischer Retarder (9) nach Anspruch 1, **dadurch gekennzeichnet, dass** das Ventil (8a) als 5/2-Wegeventil ausgebildet ist.

3. Hydrodynamischer Retarder (9) nach Anspruch 1, **dadurch gekennzeichnet,** das Ventil (8b) als 5/3-Wegeventil ausgebildet ist.

4. Hydrodynamischer Retarder (9) nach einem der vorangegangenen Ansprüche, **dadurch gekennzeichnet, dass** die Funktion des Ventils (8a, 8b) in ein bereits vorhandenes Ventil (8) integrierbar ist.

5. Hydrodynamischer Retarder (9) nach einem der vorangegangenen Ansprüche, **dadurch gekennzeichnet, dass** das Ventil (8a, 8b) über eine Zeitfunktion ansteuerbar ist.

6. Hydrodynamischer Retarder (9) nach Anspruch 1, **dadurch gekennzeichnet, dass** der Retarder (9) mit einem Getriebe einen gemeinsamen Ölhaushalt (23) aufweist, welcher aus einem Ölreservoir (12) und einem Getriebesumpf (15) besteht.

7. Hydrodynamischer Retarder (9) nach Anspruch 6, **dadurch gekennzeichnet, dass** der gemeinsame Ölhaushalt (23) zwischen dem Ölreservoir (12) und dem Getriebesumpf (15) eins Überlaufkante (16) aufweist.

8. Hydrodynamischer Retarder (9) nach einem der Ansprüche 6 oder 7, **dadurch gekennzeichnet, dass** das elektrohydraulische System (18) ein Befüllventil (10) aufweist, durch welches eine Verbindung zwischen dem Ölreservoir (12) und einem Saugkanal (13) der Pumpe (1) herstellbar ist.

9. Verfahren zur Ansteuerung eines hydrodynamischen Retarders (9) für ein Kraftfahrzeug, wobei ein elektrohydraulisches System (18) eine Steuerungs- und Regelungseinheit (17) und einen Hydraulikkreislauf (5) aufweist und über eine Pumpe (1) ein Ölumlauf sichergestellt wird, **dadurch gekennzeichnet, dass** ein Volumenstrom in einer Rückflussleitung (24) zu einem Ölhaushalt (23) durch ein Ventil (8a, 8b) elektromagnetisch über die Steuerungs- und Regelungseinheit (17) so angesteuert wird, dass der Volumenstrom in der Rückflussleitung (24) zum Ölhaushalt (23) vollständig oder teilweise gesperrt wird.

10. Verfahren nach Anspruch 9, **dadurch gekennzeichnet, dass** das Ventil (8a, 8b) über eine Zeitfunktion angesteuert wird.

## Claims

1. Hydrodynamic retarder (9) for a motor vehicle, which has a rotor and a stator and can be actuated via an electrohydraulic system (18), having an open-loop and closed-loop control unit (17) and a hydraulic circuit (5) which has a pump (1), a heat exchanger (2) and a valve (4), wherein a volumetric flow of the pump (1) can be adjusted independently of the speed of the vehicle or of the rotational speed of the cardan shaft or retarder, and an oil circulation is ensured via the pump (1), **characterized in that** an electromagnetic switching valve (8a, 8b) is arranged in the electrohydraulic system (18), the valve (8a, 8b) can be actuated via the open-loop and closed-loop control unit (17), and a volumetric flow in a return line (24) to an oil supply (23) can be partially or completely shut off via the valve.

2. Hydrodynamic retarder (9) according to Claim 1, **characterized in that** the valve (8a) is designed as a 5/2 directional valve.

3. Hydrodynamic retarder (9) according to Claim 1, **characterized in that** the valve (8b) is designed as a 5/3 directional valve.

4. Hydrodynamic retarder (9) according to one of the preceding claims, **characterized in that** the function of the valve (8a, 8b) can be integrated into an already existing valve (8).

5. Hydrodynamic retarder (9) according to one of the preceding claims, **characterized in that** the valve (8a, 8b) can be actuated via a time function.

6. Hydrodynamic retarder (9) according to Claim 1, **characterized in that** the retarder (9) together with a transmission has a common oil supply (23) which comprises an oil reservoir (12) and a transmission sump (15) .

7. Hydrodynamic retarder (9) according to Claim 6, **characterized in that** the common oil supply (23) has an overflow edge (16) between the oil reservoir (12) and the transmission sump (15).

8. Hydrodynamic retarder (9) according to either of Claims 6 and 7, **characterized in that** the electrohydraulic system (18) has a filling valve (10) by means of which a connection between the oil reservoir (12) and a suction passage (13) of the pump (1) can be made.

9. Method for actuating a hydrodynamic retarder (9) for a motor vehicle, wherein an electrohydraulic system (18) has an open-loop and closed-loop control unit (17) and a hydraulic circuit (5), and an oil circulation is ensured via a pump (1), **characterized in that** a volumetric flow in a return line (24) to an oil supply (23) is electromagnetically controlled by means of a valve (8a, 8b) via the open-loop and closed-loop control unit (17) so that the volumetric flow in the return line (24) to the oil supply (23) is completely or partially shut off.

10. Method according to Claim 9, **characterized in that** the valve (8a, 8b) is actuated via a time function.

## Revendications

1. Ralentisseur hydrodynamique (9) pour un véhicule automobile, comprenant un rotor et un stator et pouvant être commandé par le biais d'un système électrohydraulique (18), doté d'une unité de commande et de régulation (17) et d'un circuit hydraulique (5), comprenant une pompe (1), un échangeur thermique (2) et une vanne (4), le débit de la pompe (1) pouvant être réglé indépendamment de la vitesse du véhicule et/ou de la vitesse de rotation de l'arbre d'engrenage ou du ralentisseur et la circulation d'huile étant sécurisée par la pompe (1), **caractérisé en ce qu'**une vanne de commutation électromagnétique (8a, 8b) est disposée dans le système électrohydraulique (18), ladite vanne (8a, 8b) pouvant être commandée par le biais de l'unité de commande et de régulation (17) et permettant de bloquer tout ou partie d'un débit dans une conduite de reflux (24) conduisant à un logement d'huile (23).

2. Ralentisseur hydrodynamique (9) selon la revendication 1, **caractérisé en ce que** la vanne (8a) prend la forme d'une vanne à 5/2 voies.

3. Ralentisseur hydrodynamique (9) selon la revendication 1, **caractérisé en ce que** la vanne (8b) prend la forme d'une vanne à 5/3 voies.

4. Ralentisseur hydrodynamique (9) selon l'une quelconque des revendications précédentes, **caractérisé en ce que** la fonction de la vanne (8a, 8b) peut être intégrée dans une vanne (8) préexistante.

5. Ralentisseur hydrodynamique (9) selon l'une quelconque des revendications précédentes, **caractérisé en ce que** la vanne (8a, 8b) peut être commandée par le biais d'une fonction de minuterie.

6. Ralentisseur hydrodynamique (9) selon la revendication 1, **caractérisé en ce que** le ralentisseur (9) doté d'un engrenage comporte un logement d'huile (23) commun se composant d'un réservoir d'huile (12) et d'un puisard d'engrenage (15).

7. Ralentisseur hydrodynamique (9) selon la revendication 6, **caractérisé en ce que** le logement d'huile (23) commun comporte, entre le réservoir d'huile (12) et le puisard d'engrenage (15), un bord de déversement de trop-plein (16).

8. Ralentisseur hydrodynamique (9) selon l'une quelconque des revendications 6 ou 7, **caractérisé en ce que** le système électrohydraulique (18) comporte une vanne de remplissage (10) permettant de mettre en place une jonction entre le réservoir d'huile (12) et un canal d'aspiration (13) de la pompe (1).

9. Procédé de commande d'un ralentisseur hydrodynamique (9) pour un véhicule automobile, un système électrohydraulique (18) comprenant une unité de commande et de régulation (17) et un circuit hydraulique (5) et la circulation d'huile étant sécurisée par le biais d'une pompe (1), **caractérisé en ce qu'**un débit est commandé de façon électromagnétique par une vanne (8a, 8b), par le biais de l'unité de commande et de régulation (17), dans une conduite de reflux (24) conduisant à un logement d'huile (23), de telle sorte que tout ou partie du débit est bloqué dans la conduite de reflux (24) conduisant à un logement d'huile (23).

10. Procédé selon la revendication 9, **caractérisé en ce que** la vanne (8a, 8b) est commandée par le biais d'une fonction de minuterie.
